# FASCICULE DE BREVET EUROPEEN

(11) **EP 3 595 842 B1**
(45) Date de publication et mention de la délivrance du brevet: **25.10.2023**
(21) Numéro de dépôt: 18713300.4
(22) Date de dépôt: 12.03.2018
(51) Int. Cl.: B23P 15/04, F01D 5/14, F01D 9/04, F01D 5/28, F01D 5/22

(54) **PROCÉDÉ DE FABRICATION DE PIÈCES EN ALLIAGE MÉTALLIQUE DE FORME COMPLEXE**
VERFAHREN ZUR HERSTELLUNG VON METALLLEGIERUNGSTEILEN MIT KOMPLEXER FORM
METHOD FOR PRODUCING METAL ALLOY PARTS WITH COMPLEX SHAPE

(30) Priorité: 13.03.2017 FR 1752018
(43) Date de publication de la demande: 22.01.2020
(73) Titulaire: MECACHROME FRANCE, 37403 Amboise Cedex (FR)
(72) Inventeur: DE PONNAT, Arnaud, 37210 Vouvray (FR); MARTIN, Olivier, 45230 Sainte Geneviève des Bois (FR)
(74) Mandataire: Corret, Hélène
(86) Numéro de dépôt international: PCT/FR2018/000051
(87) Numéro de publication internationale: WO 2018/167384

(56) Documents cités:
- EP-A1- 1 481 755
- EP-A1- 2 423 340
- EP-A1- 2 772 614
- EP-A1- 3 103 580
- EP-A2- 1 905 956
- WO-A1-2012/052359
- WO-A2-2014/057208
- FR-A1- 2 981 590
- FR-A1- 2 993 804
- FR-A1- 2 997 885
- US-A- 3 524 712
- US-A- 5 797 725
- US-A1- 2015 016 972
- US-B1- 7 686 571

## Description

La présente invention concerne un procédé de fabrication d'aubes pleines de turbomachine.

Elle est mise en oeuvre avec des matériaux métalliques qu'il est difficile de transformer en pièces de forme complexe, comme l'Aluminiure de Titane.

Elle est mise en oeuvre avec des matériaux à base de céramiques.

Elle trouve une application particulièrement importante bien que non exclusive dans le domaine des aubes ou pales pleines utilisées dans le secteur de l'aéronautique ou le domaine de l'énergie, que ces aubes ou pales soient fixes ou mobiles.

A titre d'exemple, une turbomachine comprend au moins un aubage fixe distributeur ou stator, et un aubage mobile ou rotor.

Le stator est constitué par des aubes fixes directrices maintenues entre un anneau intérieur et un anneau extérieur ou entre deux demi-carters. Dans le cas d'une turbine, le stator permet de diriger et de distribuer l'écoulement des fluides sur les aubes du rotor qui sont ainsi entraînées en rotation.

Traditionnellement, les aubes en aéronautique sont issues soit de brut de fonderie soit de brut de forge, partiellement ou totalement ré-usinées.

Il a déjà été proposé de réaliser des aubes fixes de redresseur en plusieurs parties pour faciliter des opérations notamment de perçage ou d'usinage avant l'assemblage des différentes parties (EP 3 103 580).

La répartition des contraintes en présence dans une aube mobile est radicalement différente de celle constatée dans une aube fixe.

En particulier, pour des aubes comportant toutes une âme, un pied et une tête, les contraintes au niveau du pied (encastré pour une aube fixe et une aube mobile), jusque sur environ la moitié de l'âme, peuvent être dans un rapport de 1 (aube fixe) à 100 (aube mobile). En effet, si la force de poussée est sensiblement la même dans les deux cas, une aube mobile est soumise également à une accélération centrifuge.

C'est pourquoi cette solution est limitée à des aubes fixes. Ceci est confirmé par le fait que l'assemblage des différentes parties est réalisé par emboîtement mécanique,

Le document US 3,524,712 divulgue : un procédé d'obtention d'une aube pleine de turbomachine comprenant une âme, une tête et un pied, ledit procédé comprenant :
- une étape de réalisation d'une ébauche à partir d'au moins deux pièces, au moins l'une d'elles étant une pièce massive, lesdites au moins deux pièces étant assemblées par une technique de raccordement par diffusion et sans fusion
- une étape d'usinage de cette ébauche pour aboutir à une aube avec un profil défini.

On peut également citer les documents EP 2 772 614 et EP 1 481 755 qui concernent des aubes creuses.

Les contraintes liées à la force centrifuge sont faibles dans une aube creuse comparées à celles auxquelles est soumise une aube pleine.

Ceci résulte des positions respectives du centre de gravité de l'aube et des masses respectives des aubes.

C'est pourquoi l'enseignement de ces documents est limité à des aubes creuses.

Lorsque l'usinage du brut n'est que partiel et en particulier lorsque le profil de l'aube est fini sans ré-usinage mécanique, une opération de redressage, conformation et/ou calibrage est alors indispensable pour assurer le dimensionnement fonctionnel.

Pour des aubes de turbine de petite dimension, dans le cas de constitution de prototype de développement, ou pour mise au point, ou encore pour des aubes de série en matériaux facilement usinables et peu chers, on utilise des gammes dites en taillée masse.

De telles solutions présentent des inconvénients dans le cas où on souhaiterait utiliser de l'Aluminiure de Titane (gamma TiAl), qui présente une bonne résistance en température, mais une fragilité importante à la température ambiante.

Plus précisément, ces solutions connues posent notamment les problèmes suivants.

Dans le cas d'une gamme obtenue à partir d'un barreau brut forgé, reprendre en totalité la surface en usinage mécanique est possible mais nécessite une gamme en usinage complexe pour être capable de suivre les déformations liées aux relaxations de contrainte, voire d'utiliser une gamme auto-adaptative. En outre, utiliser un brut de forge oblige à avoir au minimum trois familles d'opération : élaboration matière, forgeage, et usinage, avec un cycle de fabrication relativement long.

Dans le cas d'une gamme obtenue avec un brut de fonderie, la reprise en totalité de la surface en usinage mécanique est certes possible mais nécessite ici encore une gamme en usinage complexe pour être capable de suivre les déformations liées aux relaxations de contrainte, ledit procédé générant quoiqu'il en soit un taux de rebut important lié aux défauts de fonderie débouchant après usinage.

Utiliser un brut de fonderie oblige enfin à avoir trois à cinq familles d'opérations: élaboration matière, fonderie, éventuellement compression isostatique à chaud, éventuellement redressage, et enfin usinage, et ce ici encore avec un cycle de fabrication relativement long.

Dans le cas d'une gamme dite taillée masse en usinage mécanique, il s'agit ici de partir d'un lopin (réalisé en fonderie ou en extrusion) et de transformer cette géométrie simple en celle de la pièce en enlevant le surplus de matière par usinage.

Compte tenu de la difficulté à usiner le gamma TiAl (encore une fois conditions de coupe assez basses, usure des outils importante, fragilité de la matière à température ambiante...) et du coût important de la matière, cette voie présente ici encore des inconvénients sérieux pour la réalisation d'aubes en série.

Il a été proposé de remédier à ces inconvénients grâce au procédé de fabrication d'aubes de turbines en alliage métallique décrit dans le document FR2997885.

Ce procédé prévoit de réaliser simultanément, à partir d'un barreau de géométrie simple et/ou axisymétrique en alliage de titane et d'aluminium, au moins deux ébauches imbriquées l'une dans l'autre par découpe au jet d'eau dans le barreau, puis d'usiner séparément chacune desdites ébauches ainsi obtenues pour aboutir aux aubes avec un profil définitif.

Ce procédé présente l'avantage de faire plusieurs pièces dans le même barreau et donc de limiter la quantité de matière perdue lors de l'obtention des ébauches.

Il permet aussi de récupérer une matière de bonne qualité et toutes choses égales par ailleurs, en plus grande quantité pour la recycler. On notera ici que seules les masselottes sont récupérables par la voie fonderie, les attaques de coulée étant chutées.

La demanderesse a poursuivi ses recherches pour essayer de diminuer encore la quantité de matière à recycler, après obtention des ébauches d'aubes, ainsi que le coût de ces ébauches.

Dans ce but, l'invention propose notamment un procédé d'obtention d'une aube pleine de turbomachine comprenant une âme, une tête et un pied, ledit procédé comprenant :
- une étape de réalisation d'une ébauche à partir d'au moins deux pièces, au moins l'une d'elles étant une pièce massive obtenue par découpe d'un barreau en un alliage métallique ou en un matériau à base de céramique, lesdites au moins deux pièces étant assemblées par une technique de raccordement avec diffusion et sans fusion et,
- une étape d'usinage de cette ébauche pour aboutir à une aube avec un profil défini.

Il convient de noter que l'on entend par « pièce massive » une pièce qui n'est pas sous forme de poudre au moment de l'assemblage.

Par ailleurs, dans le cadre de la présente invention, une étape d'usinage est comprise comme une opération consistant à enlever au moins 25% de masse de matière par rapport à la masse de la pièce finie.

Ainsi, ce procédé est basé sur une conception d'obtention d'une aube radicalement différente de celle retenue dans les procédés de fabrication actuellement mis en oeuvre pour des aubes pleines et rotatives.

En effet, tous ces procédés permettent de réaliser des ébauches d'aubes en une seule pièce, alors que le procédé selon l'invention consiste à réaliser l'aube en au moins deux pièces assemblées.

Cette démarche n'est pas celle de l'homme du métier car multiplier les opérations avant l'obtention de l'ébauche d'une aube semble a priori plus compliqué que de réaliser en une fois cette ébauche.

De plus, l'assemblage est souvent assimilé à des risques de fragilisation et donc de détérioration de la qualité, ce qui exclut le recours à un assemblage pour des aubes mobiles soumises à des sollicitations importantes, notamment au niveau de leur pied qui est fixé sur un moyeu ou un disque et de la partie centrale de leur âme qui doit pouvoir résister à des impacts.

Dans le cadre de l'invention, l'assemblage utilisé n'est pas un assemblage mécanique comportant une étape d'emboîtement de deux pièces adjacentes l'une dans l'autre, ni un assemblage par collage.

Il s'agit d'un assemblage par diffusion, c'est-à-dire un assemblage assuré essentiellement par la diffusion d'éléments chimiques entre les deux pièces assemblées, et sans fusion.

Ainsi, un assemblage par diffusion est réalisé au moyen de procédés qui se déroulent dans un milieu solide, soit entièrement (soudage par diffusion), soit en combinant une phase liquide (brasage-diffusion avec disparition de la phase liquide en fin de palier de brasage).

Dans les procédés de friction linéaire, les procédés de frittage flash et les procédés assimilés, la diffusion à l'état solide n'est pas le seul mécanisme opérant puisque la viscoplasticité intervient de façon très localisée au niveau de l'interface.

Il est apparu qu'un assemblage de ce type n'entraînait pas de dégradation des caractéristiques mécaniques de l'aube, ce qui permet d'utiliser ce procédé à la fois pour des aubes fixes et mobiles.

En pratique, la fabrication de chaque pièce constitutive de l'aube est simplifiée car il est possible de choisir, pour chacune d'elles, le procédé le plus approprié.

Il est également possible de choisir le procédé qui génère le moins de perte de matière.

Par ailleurs, chaque pièce constitutive est obtenue selon l'invention à partir d'un barreau en un alliage métallique mais également à partir de chutes récupérées d'autres fabrications, notamment des chutes d'un procédé de découpe par jet d'eau. Il s'agira alors d'une pièce massive au sens de l'invention.

Une telle pièce massive est alternativement selon l'invention en matériau à base de céramique et par exemple constituée d'une matrice fibreuse en céramique imprégnée de céramique.

Le procédé selon l'invention permet en définitive de simplifier la fabrication, de limiter la quantité de matières utilisées ainsi que la quantité de matières à recycler, sans affecter la robustesse de la pièce obtenue.

Dans des modes de réalisation avantageux, on a par ailleurs et/ou de plus recours à l'une et/ou à l'autre des dispositions suivantes :
- au moins deux desdites pièces sont massives ;
- au moins une desdites pièces est obtenue à l'aide de poudre, en étant formée directement sur ladite au moins une pièce massive ;
- au moins une pièce massive est un bloc en un alliage métallique ;
- l'âme de ladite aube est obtenue à partir d'un bloc découpé en périphérie d'un brut cylindrique de section pleine, pour bénéficier de son rayon de courbure dans la réalisation de l'extrados de ladite âme ;
- l'âme de ladite aube est obtenue à partir d'un bloc découpé dans un brut cylindrique de section annulaire, pour bénéficier de son rayon de courbure dans la réalisation de l'extrados et/ou de l'intrados de ladite âme ;
- au moins une pièce massive est à base de céramique, notamment en un matériau composite à matrice céramique ;
- la poudre est une poudre d'alliage métallique ou une poudre de céramique ;
- l'alliage métallique est de l'aluminure de titane (gamma TiAl) ;
- l'assemblage desdites au moins deux pièces est effectué par un procédé de soudage par friction linéaire ;
- l'assemblage desdites au moins deux pièces est effectué par un procédé de soudage diffusion sous pression ;
- au moins une pièce massive est usinée préalablement à son assemblage.

L'invention concerne également une aube pleine en aluminure de titane et/ou en un matériau à base de céramique, obtenue par le procédé selon l'invention.

L'invention concerne de préférence aussi une turbomachine comprenant au moins une telle aube.

L'invention sera mieux comprise et d'autres buts, avantages et caractéristiques de celle-ci apparaîtront plus clairement à la lecture de la description qui suit et qui est faite au regard des dessins annexés sur lesquels :
La figure 1 est une vue en perspective représentant une aube de turbomachine obtenue par un procédé selon l'invention.
Les figures 2A et 2B sont des vues en perspective illustrant un brut cylindrique de section annulaire avant et après obtention d'une pluralité de blocs destinés à la réalisation d'âmes d'aubes de turbomachine, chacun étant propre à former une pièce massive de l'ébauche réalisée selon la première étape d'un mode de réalisation de l'invention.
Les figures 2C et 2D sont des vues en perspective illustrant un brut cylindrique de section pleine avant et après obtention d'une pluralité de blocs destinés à la réalisation d'âmes d'aubes de turbomachine, propres à former des pièces massives pour ébauche selon un autre mode de réalisation de l'invention.
Les figures 3A et 3B illustrent en perspective et en vue latérale un brut cylindrique découpé en blocs destinés à la réalisation d'extrémités d'aubes de turbomachine, propres à former des pièces massives pour ébauche selon un autre mode de réalisation de l'invention.
Les figures 4A et 4B illustrent un exemple de répartition de blocs destinés à la réalisation d'âmes et d'extrémités d'aubes de turbomachine dans un brut cylindrique de section pleine, la figure 4A étant une vue de dessus du brut et la figure 4B une vue éclatée correspondant à la figure 4A.
Les figures 5A et 5B sont des vues en perspective illustrant un autre exemple de brut (ici de section hexagonale et obtenu à partir de celui illustré aux figures 4A et 4B) permettant l'obtention de blocs destinés à la réalisation d'extrémités d'aubes de turbomachine et propres à former des pièces massives utilisables avec l'invention, la figure 5B étant une vue éclatée de la figure 5A.
La figure 6A est une vue en perspective illustrant un brut cylindrique de section pleine permettant l'obtention de blocs destinés chacun à la réalisation d'une âme et d'un pied d'une aube de turbomachine, et formant une pièce massive utilisable selon l'invention.
La figure 6B est une vue en perspective d'un brut cylindrique de section pleine permettant l'obtention de blocs destinés chacun à la réalisation d'une âme, d'un pied, ou de la tête d'une aube et formant une pièce massive utilisable selon l'invention.
Les figures 7A-7B représentent une ébauche d'aube selon un mode de réalisation de l'invention, obtenue à partir de trois pièces massives, l'assemblage étant réalisé bout à bout, la figure 7A étant une vue en perspective et la figure 7B étant une vue en coupe selon A-A.
Les figures 8A-8B sont des vues similaires aux figures 7A-7B selon un autre mode de réalisation de l'invention, l'assemblage étant du type bout-face.
Les figures 9A et 9B sont des vues en coupe similaires aux figures 7B et 8B illustrant deux modes d'assemblage d'une ébauche d'aube obtenue selon deux autres modes de réalisation de l'invention, à partir de deux pièces massives.
Les figures 10A-10D sont des vues en perspective montrant des aubes obtenues selon un autre mode de réalisation de l'invention, comprenant respectivement une tête et/ou un pied réalisés à l'aide de poudre sur une âme massive.
Les figures 11A à 11C représentent schématiquement trois étapes d'un procédé de densification de poudres utilisable pour solidariser les pièces entre elles dans un mode de réalisation de l'invention.

Les éléments communs aux différentes figures seront désignés par les mêmes références.

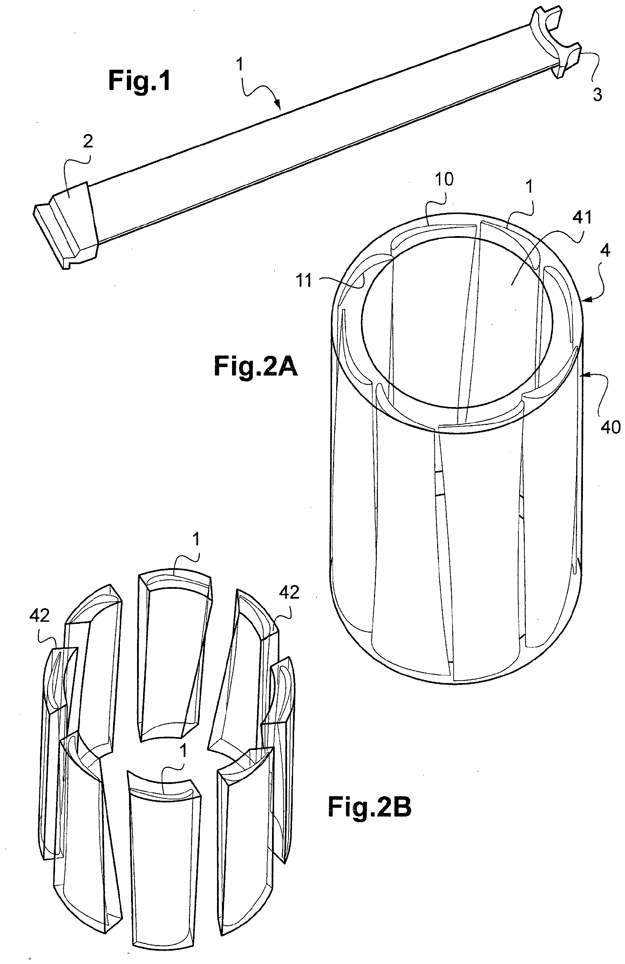

En référence tout d'abord à la figure 1, une aube de turbomachine comprend classiquement trois zones distinctes : la pale ou âme 1 centrale et, à chaque extrémité de celle-ci, le pied 2 qui permet la fixation de l'aube sur l'axe moteur et la tête 3.

De façon connue, l'âme présente une section en croissant de lune, le pied 2 a une forme généralement parallélépipédique et la tête 3 a une forme générale de U.

Cette figure montre que les trois parties constitutives d'une aube de turbomachine présentent des formes bien distinctes.

Le procédé selon l'invention se propose de mettre à profit ces différences de formes pour minimiser la part de la matière nécessaire à la fabrication de l'aube qui est perdue ou qui doit être recyclée.

C'est pourquoi, le procédé selon l'invention propose de dissocier l'aube en au moins deux pièces. Dans les exemples décrits en référence aux figures 2A-2D, 3A-3B, 4A-4B et 5A-5B, l'aube est dissociée en trois pièces, cette dissociation étant réalisée à chaque changement majeur de section. En pratique, ceci revient à dissocier l'âme, le pied et la tête.

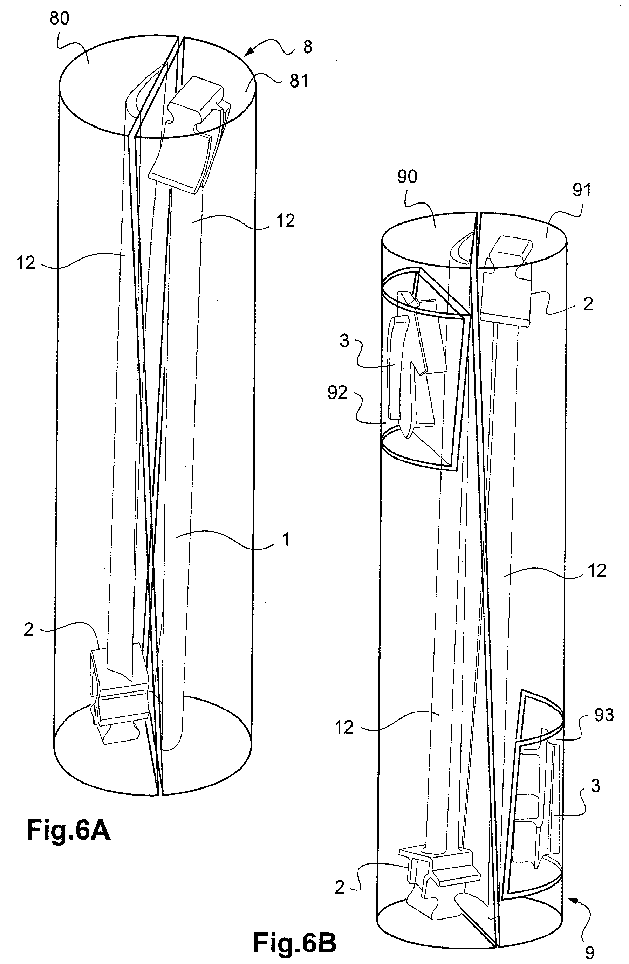

L'invention n'est cependant pas limitée à cette application et l'aube pourrait par exemple être dissociée en deux pièces, chacune d'elles correspondant à des zones de contraintes différentes, comme cela sera décrit en référence aux figures 6A-6B.

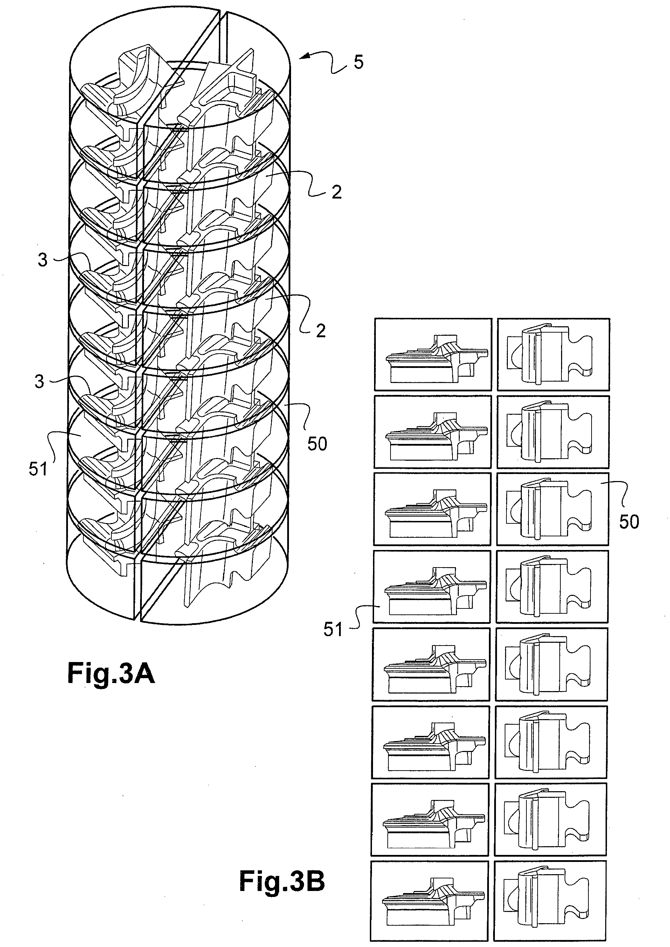

Il est tout d'abord fait référence aux figures 2A-2D et 3A-3B qui montrent des exemples d'obtention de blocs destinés à la formation d'âme, de pied et de tête pour des aubes de turbomachine.

En pratique, comme cela sera expliqué dans la suite de la description, un bloc conçu pour une pièce pourra servir à réaliser une partie d'une autre pièce. Cependant, pour simplifier les explications, on conservera la terminologie âme, pied et tête utilisée pour désigner les parties d'une aube obtenues à partir d'un bloc de matière.

Ainsi, la figure 2A illustre un brut cylindrique de section annulaire 4. Il peut notamment s'agir d'un anneau obtenu par une technique de fonderie centrifuge ou par extrusion. Dans ce brut 4, sont représentées en traits fins huit âmes pour visualiser leur encombrement et leur positionnement à l'intérieur du brut 4.

On comprend donc que la hauteur du brut 4 est sensiblement égale à la longueur des âmes que l'on souhaite obtenir. Comme cela sera expliqué dans la suite de la description, ceci dépend du type de liaison avec les extrémités de l'aube et de la nature de ces extrémités (massives ou à base de poudre).

Cette figure 2A a pour objet de montrer comment la matière du brut 4 pourra être utilisée de façon optimale pour obtenir ces huit âmes. Ainsi, la figure 2A montre que l'on prévoit de positionner les âmes 1, de telle sorte que leur concavité soit sensiblement tournée vers l'axe central X du bloc 4. En d'autres termes, les concavités de l'anneau 4 et de chaque âme sont tournées sensiblement dans la même direction.

Ainsi, l'extrados 10 d'une âme 1 est situé du côté de la périphérie extérieure 40 du brut 4, tandis que son intrados 11 est tourné du côté de la périphérie interne 41 du brut 4.

La figure 2A montre que, dans cet exemple, les âmes sont disposées sensiblement tête-bêche pour utiliser au mieux la matière du bloc 4, dans la mesure où la section de l'âme est plus large d'un côté que de l'autre.

La figure 2B montre le brut 4, une fois découpé entre chacune des représentations des âmes 1, selon sa hauteur.

La découpe est réalisée par jet d'eau dans la mesure où les plans de découpe ne sont pas axiaux.

Ainsi, huit blocs 42 sont obtenus et dans chacun d'eux, une âme 1 pourra être usinée.

Il convient de noter que l'invention n'est pas limitée à l'utilisation d'un brut cylindrique de section annulaire mais peut également se baser sur un brut conique de section annulaire. Un tel brut peut être choisi pour réaliser des âmes dont la section est plus large d'un côté que de l'autre. Dans les deux cas, le brut peut aussi être découpé selon des plans axiaux.

De façon générale, on sait que dans un brut métallique, des porosités peuvent exister en son centre. Il est ainsi nécessaire de réaliser des post-traitements pour être certain qu'un brut métallique présente des qualités adaptées, dans toute son épaisseur.

Or, ces post-traitements sont très onéreux.

On comprend donc qu'un brut de section annulaire, tel que le brut 4, peut être utilisé sans que des post-traitements soient nécessaires, la partie périphérique d'un brut étant toujours de meilleure qualité que sa partie centrale. En pratique, des défauts peuvent être présents mais ils sont souvent acceptables.

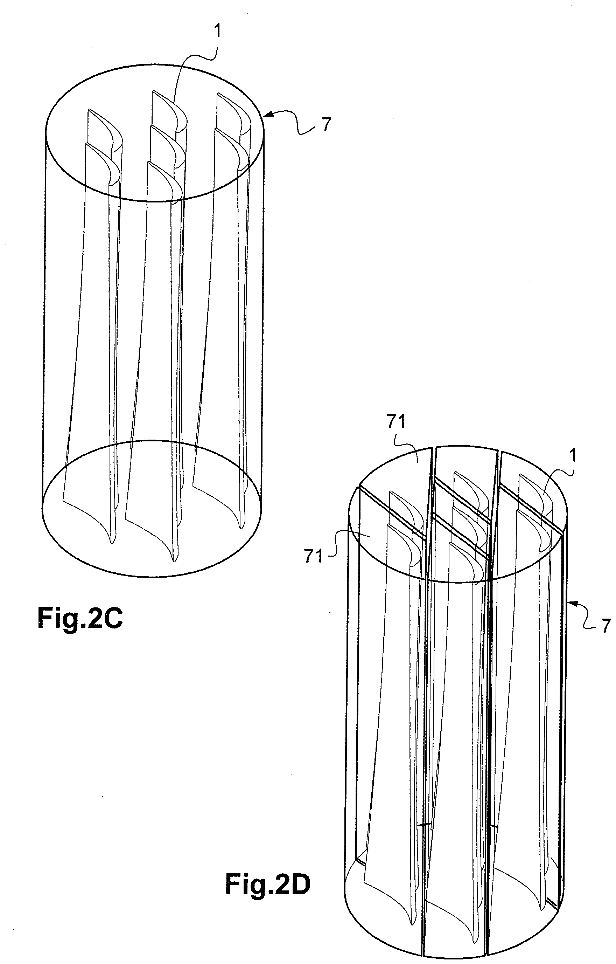

La figure 2C illustre un brut cylindrique de section pleine 7 dans lequel sont illustrées sept âmes en traits fins pour montrer leur encombrement et leur positionnement.

Comme pour le brut 4, la hauteur du brut 7 est sensiblement égale à la longueur des âmes 1 que l'on souhaite obtenir.

Des post-traitements ont été nécessaires pour assurer une même qualité sur toute son épaisseur. Ils consistent en une compression isostatique à chaud en particulier pour refermer les défauts de solidification pour les bruts issus de fonderie. Cette compression n'est pas nécessaire pour un brut obtenu par extrusion. Par ailleurs, un traitement thermique est dans tous les cas souvent nécessaire pour obtenir les propriétés minimales requises pour l'application.

La figure 2D illustre le brut 7 une fois découpé entre la représentation des aubes, selon deux séries de plans parallèles à son axe central, les plans des deux séries formant entre eux un angle non nul, de façon à définir dans cet exemple sept blocs 71 dans lesquelles sont illustrés en traits fins le positionnement et l'encombrement de chaque aube.

Il est maintenant fait référence aux figures 3A et 3B.

La figure 3A illustre, vu en perspective, un brut cylindrique plein 5 dans lequel sont illustrés en traits fins huit pieds 2 et huit têtes 3, de façon à matérialiser leur encombrement et leur positionnement à l'intérieur du brut 5.

Ce brut 5 et le brut 4 ou le brut 7 sont typiquement obtenus à partir de lopins différents et leur matière n'est pas obligatoirement identique. Compte tenu de son épaisseur, le brut 5 a du subir des post-traitements appropriés pour assurer une même qualité sur toute son épaisseur. Par ailleurs, son diamètre peut être inférieur au diamètre intérieur du brut 4 et sa hauteur inférieure à celle du brut 4 ou du brut 7 puisque les deux bruts sont réalisés indépendamment. Ainsi, le brut 5 peut par exemple être obtenu par extrusion pour que ses dimensions soient définies au plus juste, afin de minimiser la quantité de matière utilisée.

Pour minimiser leur encombrement, les pieds 2 comme les têtes 3 sont prévus disposés à plat les uns sur les autres.

La figure 3A montre que le brut 5 est découpé selon un plan médian contenant son axe central X, ainsi que selon plusieurs plans perpendiculaires à cet axe central afin d'isoler huit blocs 50 et huit blocs 51, destinés à la formation respectivement d'un pied 2 ou d'une tête 3.

Ces différents blocs 50 et 51 sont également illustrés sur la figure 3B qui est une vue de côté de la figure 3A.

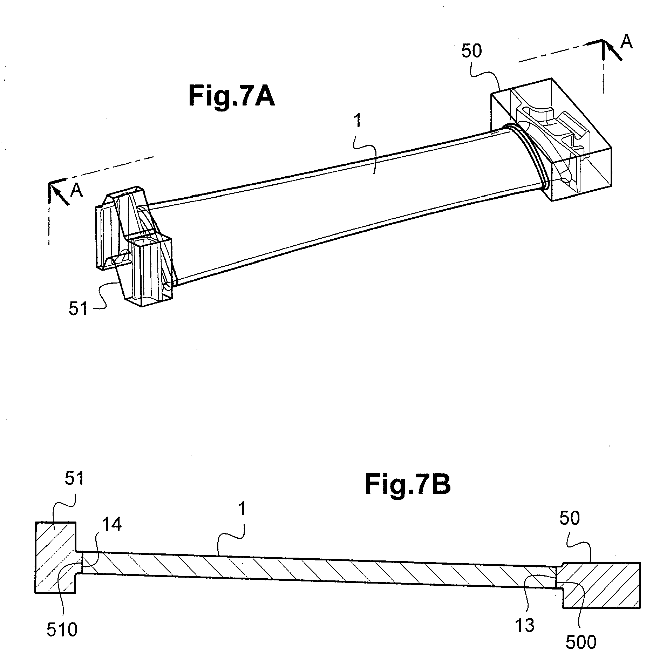

Cette découpe est ici réalisée à la scie. Avec une découpe au jet d'eau, les blocs pourraient présenter une forme plus proche du pied ou de la tête de l'aube finale, comme cela est par exemple illustré sur la figure 7A.

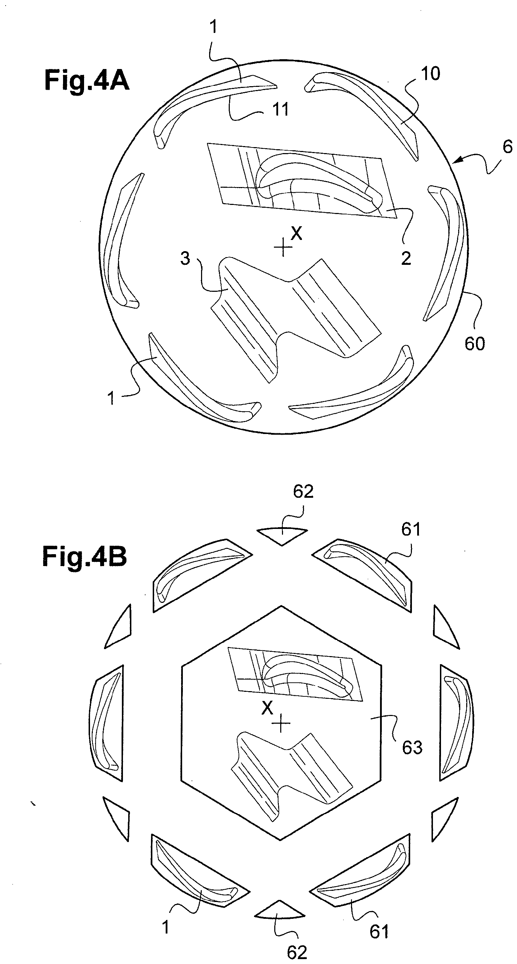

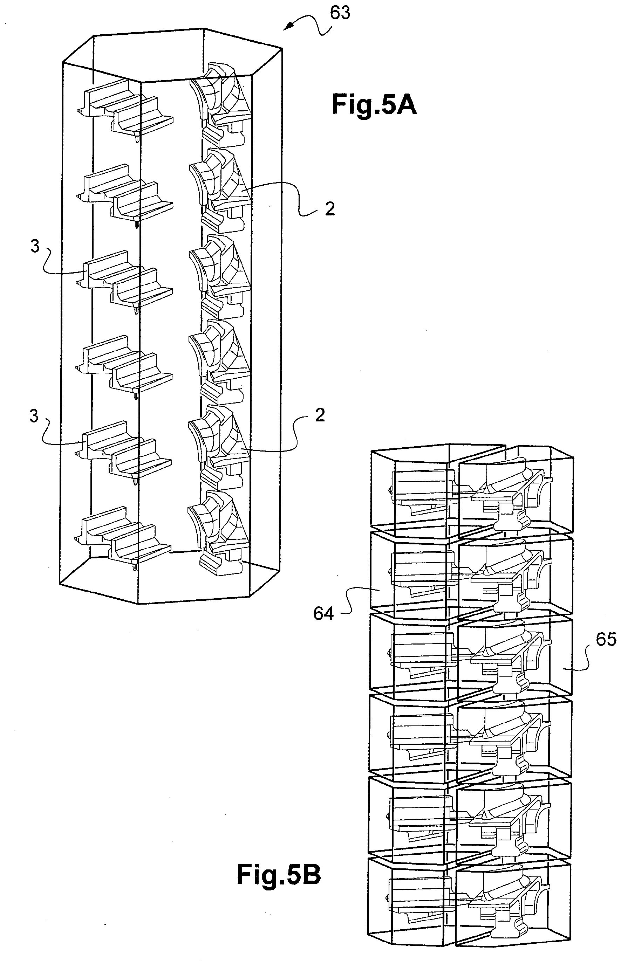

Il est maintenant fait référence aux figures 4A-4B et 5A-5B pour décrire d'autres étapes permettant d'obtenir une pluralité d'âmes, de pieds et de têtes d'aubes de turbomachine, à partir d'un même brut cylindrique.

Un tel brut ou barreau 6 est illustré vue de dessus sur la figure 4A.

Cette figure illustre également en traits fins l'emplacement et l'encombrement de six âmes 1, positionnées en périphérie du brut 6 et d'un pied 2 et d'une tête 3 positionnés dans la partie centrale du brut 6.

On comprend que les âmes 1 s'étendent sur toute la hauteur du brut 6 dont la hauteur est donc sensiblement égale à la longueur des âmes. Comme précédemment décrit au regard de la figure 2A, les concavités du brut 6 et de chaque âme 1 sont sensiblement tournées dans la même direction. Ainsi, l'extrados 10 de chaque âme 1 est tourné vers la périphérie extérieure 60 du brut 6, tandis que l'intrados 11 de chaque âme 1 est sensiblement tourné vers l'axe central X du barreau.

Bien entendu, au centre du brut 6, on peut prévoir l'encombrement d'une pluralité de pieds 2 et de têtes 3, en pratique six dans le cas présent, superposés selon la hauteur du brut 6.

La figure 4B illustre la découpe du brut 6, celle-ci permettant d'individualiser six blocs 61 dans chacun desquels pourra être réalisée une âme 1. Ces blocs sont ici découpés selon des plans parallèles à l'axe X pour permettre, soit une découpe par jet d'eau, soit une découpe à la lame de scie. Les blocs 62 isolés entre deux blocs 61 constituent des chutes.

La découpe des blocs 61 et 62 permet d'isoler un brut central 63 qui s'étend sur toute la hauteur du brut 6 et d'obtenir des blocs 61 tous sensiblement identiques.

Les blocs 61 sont réalisés dans la partie périphérique du bloc cylindrique 6 qui est d'une meilleure qualité que le brut central 63 et qui, en pratique, ne nécessite souvent aucun post-traitement.

On constate que la section du brut 63 est un hexagone. En effet, il est relativement aisé de découper un bloc suivant sa hauteur, avec une scie à lame, en formant des pans coupés. Ce n'est pas le cas si l'on souhaite obtenir un brut de section cylindrique.

La figure 5A est une vue en perspective du bloc 63, dans lequel sont représentés en traits fins six pieds 2 et six têtes 3.

La figure 5A montre que les têtes 3 sont prévues à plat, tandis que les pieds 2 sont prévus à la verticale.

On comprend que, si la hauteur du bloc 63 est nécessairement sensiblement égale à la hauteur des âmes 1, on peut cependant optimiser la disposition des pieds 2 et des têtes 3 dans le brut 63 pour réduire son diamètre et donc le diamètre du brut 6.

La figure 5B montre que le brut 63 est découpé selon un plan médian contenant son axe central X, ainsi que selon plusieurs plans perpendiculaires à cet axe afin d'obtenir six blocs 64 destinés à la formation de pieds et six blocs 65 destinés à la formation de têtes.

Bien entendu, le brut central 63 est utilisé pour la formation de pieds et/ou de têtes dans la mesure où la qualité de la matière le permet, c'est-à-dire en pratique si le brut 6 a subi des post-traitements appropriés. Dans ce cas, les six ébauches d'aube sont avantageusement obtenues à partir du même lot matière.

Dans le cas contraire, seule la partie périphérique du brut 6 est utilisée pour la formation d'âmes (comme illustré aux figures 2A et 2B) et le bloc 63 est recyclé.

Les pieds et les têtes sont alors obtenus à partir d'un brut qui n'appartient pas au même lot matière que le brut 6.

Les figures 6A et 6B illustrent deux variantes du procédé selon l'invention dans lequel une ébauche d'aube est obtenue à partir de deux pièces massives et non trois, comme décrit précédemment.

Ainsi, la figure 6A illustre un brut cylindrique 8 et de section pleine, dans lequel sont illustrées en traits fins deux pièces 12 correspondant à une âme 1 et un pied 2, pour montrer leur encombrement et leur positionnement.

La hauteur du brut 8 est au moins égale à la longueur des pièces 12 que l'on souhaite obtenir.

De façon à utiliser au mieux la matière du brut 8, les deux pièces 12 sont disposées tête-bêche.

La figure 6A illustre également comment le brut 8 est découpé en deux blocs 80 et 81, chacun d'eux permettant l'usinage d'une pièce 12.

La figure 6A montre que le plan de découpe est légèrement vrillé par rapport au plan longitudinal médian du brut 8, pour obtenir ce résultat.

On comprend qu'une ébauche d'aube pourra être alors obtenue à partir du bloc 80, 81 et par exemple d'un bloc 50, tel qu'illustré à la figure 3A.

Comme on le verra dans la suite de la description, la tête 3 pourra également être obtenue à partir de poudre.

La figure 6B illustre une variante dans laquelle, à partir d'un brut cylindrique 9 de section pleine, similaire au bloc 8 mais de diamètre supérieur, peuvent être obtenues à la fois des blocs destinés à la formation de pièces 12 et des blocs destinés à la formation de têtes 3 d'une aube.

Ainsi, sont représentées en traits fins à l'intérieur du brut 9, deux pièces 12 similaires à celles illustrées à la figure 6A et également disposées tête bêche, ainsi que deux têtes 3.

La figure 6B montre que les deux têtes 3 sont prévues dans la zone de la pièce 12 la plus éloignée du pied 2, pour la pièce 12 en vis-à-vis de laquelle elle est prévue.

La figure 6B illustre également comment peut être réalisée la découpe du brut 9 pour obtenir deux blocs 90 et 91 dans chacun desquels pourra être usinée une pièce 12, ainsi que deux blocs 92 et 93, dans chacun desquels pourra être usinée une tête 3.

Cette variante présente l'avantage de pouvoir réaliser des ébauches d'aube dans le même lot matière.

Il va maintenant être fait référence aux autres figures pour illustrer comment une ébauche d'une aube de turbomachine peut être obtenue à partir des blocs illustrés aux figures 2B, 3A-3B, 4B, 5B, 6A et 6B.

De façon générale, deux types de procédé peuvent être distingués : ceux dans lequel une ébauche de l'aube est obtenue uniquement à partir de pièces massives et ceux dans lequel l'ébauche comporte au moins une pièce obtenue à l'aide de poudre.

Par ailleurs, dans les deux types de procédé, l'ébauche de l'aube peut être obtenue à partir de deux ou trois pièces.

Ainsi, pour les procédés du premier type, à la fois l'âme, le pied et la tête de l'aube sont obtenus à partir des blocs illustrés aux figures 2B, 3A-3B, 4B, 5B ou 6B.

Dans les procédés du deuxième type, on pourra utiliser par exemple les blocs illustrés aux figures 2B et 4B destinés à l'obtention d'une âme, puis réaliser la tête et le pied de l'aube au moyen de poudre ou réaliser une des extrémités à l'aide d'un bloc illustré par exemple aux figures 3A-3B et 5B et l'autre extrémité à partir de poudre, ou encore réaliser l'âme et le pied à l'aide des blocs illustrés à la figure 6A et la tête à partir de poudre.

On va ensuite s'intéresser au procédé du premier type, dans lequel toutes les pièces utilisées dans l'obtention d'une ébauche d'aube sont des pièces massives.

Comme l'ont montré les figures précédentes, cette ébauche d'aube peut, par ailleurs être obtenue à partir de deux ou trois pièces massives.

On va tout d'abord s'intéresser à l'obtention d'une ébauche d'aube à partir de trois pièces massives.

Les pièces massives destinées à l'obtention d'une âme peuvent ainsi consister en les blocs 42, 71 et 61 décrits en référence aux figures 2B, 2D et 4B.

Par ailleurs, les pièces massives destinées à l'obtention de pieds ou de têtes de l'aube peuvent consister en les blocs 50 et 51 illustrés à la figure 3A ou 3B ou en les blocs 64 et 65 illustrés à la figure 5B.

Lorsque le bloc correspondant à une âme est du type des blocs 42 et 71 illustrés aux figures 2B et 2D, on comprend que l'âme, d'une part et la tête et le pied, d'autre part de l'aube finale, ne sont pas obtenus à partir du même lopin de matière.

Comme expliqué au regard des figures 4A-4B et 5A-5B, toutes les pièces massives destinées à l'obtention de l'ébauche d'une aube peuvent, au contraire, provenir du même brut et être donc constituées de la même matière.

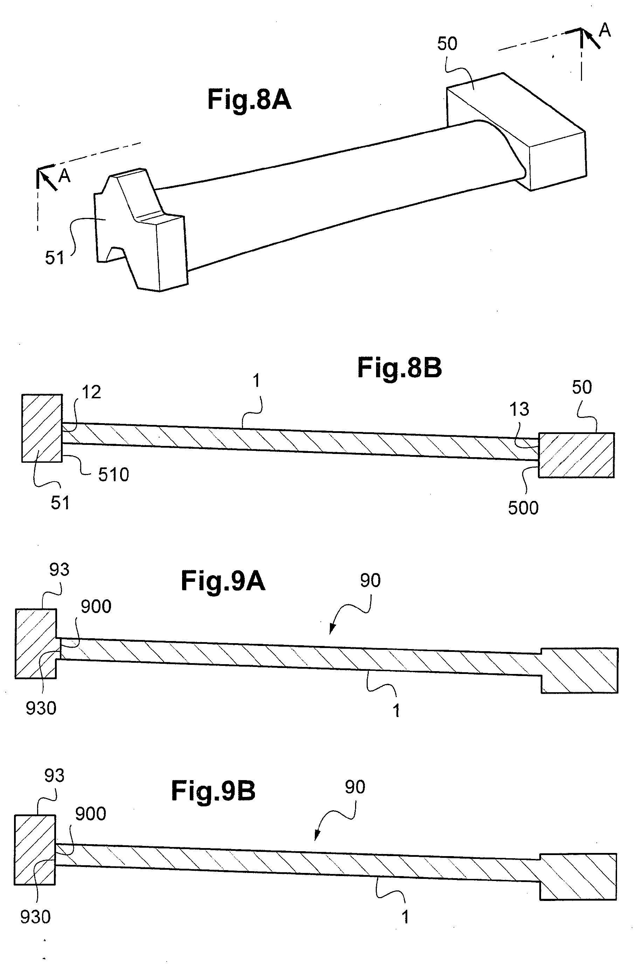

Les différents modes d'assemblage de ces pièces massives vont maintenant être décrits en référence aux figures 7A-7B et 8A-8B.

De façon générale, on peut prévoir d'assembler entre eux des blocs, l'ébauche obtenue étant ensuite usinée pour obtenir une aube.

On pourrait également envisager d'usiner chaque bloc ou au moins certains d'entre eux pour obtenir la pièce à laquelle il est destiné ou une forme approchante de celle-ci.

Cependant, un assemblage au moins en partie par blocs est préféré car il permet de limiter le nombre d'opérations d'usinage et, comme cela va être montré, cela donne plus de latitude dans l'utilisation des pièces massives pour l'obtention de l'aube.

Dans les exemples illustrés aux figures 7A-7B et 8A-8B, l'âme 1 a été préalablement usinée, à partir par exemple d'un des blocs 42, 71 ou 61 illustrés aux figures 2B, 2D et 4B.

En revanche, les blocs destinés à l'obtention d'une tête ou d'un pied n'ont pas encore été usinés.

Dans l'exemple illustré sur la figure 7A, les blocs 50 et 51 utilisés sont ceux représentés à la figure 3A, puis ébauchés par usinage.

Il convient également de noter que des blocs présentant la géométrie illustrée à la figure 7A pourraient être obtenus par une découpe au jet d'eau.

Les figures 7A et 7B illustrent un assemblage entre l'âme 1 et les blocs 50 et 51 du type bout à bout.

Dans ce type d'assemblage, les faces 510 du bloc 51 et 14 de l'âme 1 qui sont assemblées entre elles présentent la même surface. Il en est de même pour les faces 500 du bloc 50 et 13 de l'âme 1.

La figure 7B montre qu'avec ce type d'assemblage, les blocs 50 et 51 destinés à la formation du pied et de la tête participent, en pratique, également à la formation de l'âme 1 dans l'ébauche finale.

Dans ce cas, les blocs à partir desquels sont formées les âmes 1, par exemple les blocs 4, 7 ou 6, peuvent présenter une hauteur inférieure à la longueur des âmes.

Les figures 8A et 8B montrent un assemblage du type bout-face.

Dans ce type d'assemblage, les faces 510 du bloc 51 et 12 de l'âme 1 qui sont assemblées entre elles ne présentent pas les mêmes surfaces et il en est de même pour les faces 13 de l'âme 1 et 500 du bloc 50.

Dans tous les cas, l'assemblage est réalisé par une technique de raccordement sans fusion.

Il peut notamment s'agir d'un procédé de soudage par friction linéaire par exemple le procédé LFW (Linear Friction Welding dans la terminologie anglaise).

Ce procédé LFW générant un refoulement au niveau du joint entre deux pièces, il est nécessaire de prévoir des surlongueurs.

Dans ce cas, les blocs à partir desquels sont formées les âmes 1 pourront présenter une hauteur supérieure à la longueur des âmes.

On peut également utiliser un procédé de frittage flash ou SPS (Spark Plasma Sintering) qui évite tout refoulement important de matière au niveau du joint entre deux pièces (contrairement au procédé LFW) .

Par ailleurs, l'assemblage des trois pièces est réalisé simultanément ou successivement, selon notamment les contraintes des procédés d'assemblage mis en oeuvre.

A titre de variante, l'âme et le pied peuvent être réalisés à partir d'un même bloc, tel que les blocs 80, 81 illustrés à la figure 6A ou les blocs 90 et 91 illustrés à la figure 6B.

Dans ce cas, une ébauche d'aube sera obtenue à partir d'un de ces blocs 80, 81 ou 90, 91 et d'un autre bloc correspondant à la tête de l'aube.

Il pourra s'agir d'un bloc 51, tel qu'illustré à la figure 3A ou encore d'un bloc 63 tel qu'illustré à la figure 5B.

On comprend que, dans le premier cas, l'ébauche comprendra des éléments provenant de lopins de matière différents. En revanche, si l'ébauche est obtenue à partir par exemple des blocs 90 et 92, l'ébauche de l'âme sera réalisée dans une seule matière.

Cet assemblage ne sera pas décrit plus en détail. Il pourra être du type bout à bout ou bout face, tel qu'illustré sur les figures 9A et 9B.

Ces deux figures illustrent deux pièces massives par exemple le bloc 90 et le bloc 93, le bloc 90 ayant été préalablement usiné pour obtenir l'âme 1 de l'aube finale.

La figure 9A montre un assemblage du type bout à bout, les faces 930 et 900 des blocs 93 et 90 présentant la même surface.

A titre de variante, la figure 9B illustre un assemblage du type bout-face, les surfaces 930 et 900 des blocs 93 et 90 qui sont assemblées présentant une surface différente.

On comprend que cette variante du procédé permet d'obtenir une aube qui est réalisée d'un seul tenant dans la zone qui subit le plus de contraintes.

Dans les modes de mise en oeuvre illustrés aux figures 7A, 7B, 8A-8B et 9A-9B, les blocs ont été préalablement ébauchés par usinage.

L'invention n'est cependant pas limitée à cet exemple de mise en oeuvre et l'un de ces blocs pourrait être directement utilisé, ou encore préusiné à sa géométrie finale, en laissant des surépaisseurs aux zones d'interface.

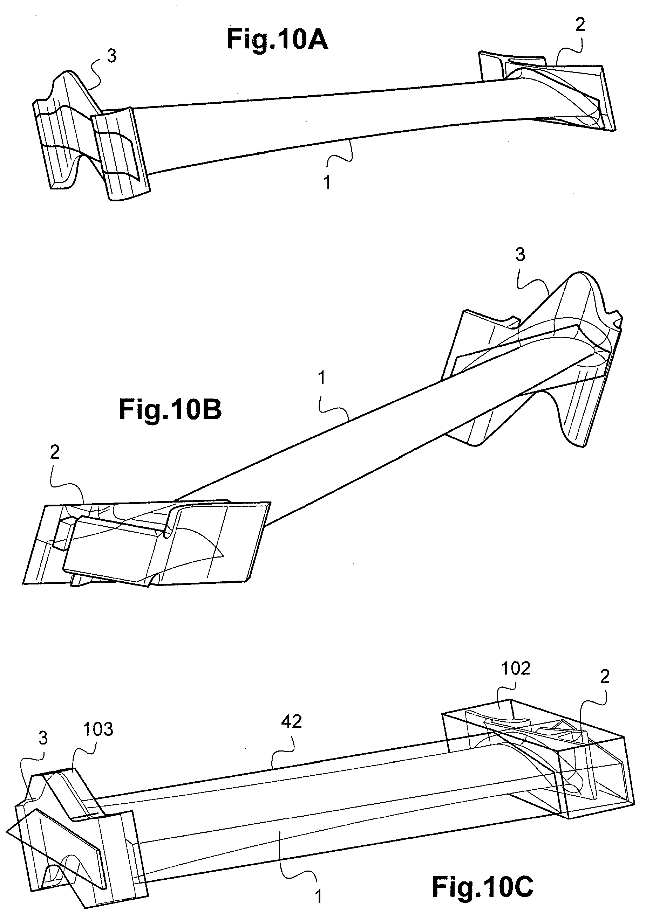

Il est maintenant fait référence aux figures 10A à 10D pour décrire un exemple de procédé du deuxième type, dans lequel au moins une pièce intervenant dans la réalisation de l'ébauche de l'aube est réalisée à partir de poudre.

Il est tout d'abord fait référence aux figures 10A et 10B qui sont deux vues d'une même aube obtenue à partir d'une âme 1 réalisée à partir d'une pièce massive et un pied 2 et une tête 3 réalisés à partir de poudre.

Ainsi, l'âme 1 peut être obtenue à partir d'un des blocs 42, 71 ou 61 décrits en référence aux figures 2B, 2D et 4B, mais de longueur supérieure à celle de l'âme 1 dans l'aube finale, le bloc étant préalablement usiné ou non avant la formation de la tête et du pied.

La figure 10C illustre ainsi un procédé d'obtention d'une ébauche d'aube à partir d'une pièce massive telle que le bloc 42 illustré à la figure 2B et permettant l'obtention d'une âme 1 (illustrée en traits fins sur la figure 10C) et de deux blocs 102 et 103 obtenus à partir de poudre et permettant la formation d'un pied 2 et d'une tête 3 (illustrés en traits fins sur la figure 10C à l'intérieur des blocs 102 et 103).

Bien entendu, le bloc permettant la réalisation d'une âme pourrait être également du type du bloc 71 illustré à la figure 2D ou encore du bloc 61 illustré à la figure 4B, ou encore d'autres blocs obtenus par des procédés différents, notamment par extrusion fonderie ou frittage de poudre (Spark Plasma Sintering, Métal Injection Molding) et conduisant à une géométrie plus proche des cotes, voire finie.

Les blocs 102 et 103 sont formés directement sur les extrémités du bloc 42 à partir de poudre densifiée par une technique de soudage diffusion sous pression, telle que la technique dite SPS (Spark Plasma Sintering dans la terminologie anglaise).

Pour cela, on s'assure préalablement de la propreté de l'interface et en particulier de ce qu'il n'y a pas de grain abrasif (résultant d'une découpe par jet d'eau) incrusté dans la surface de la matière.

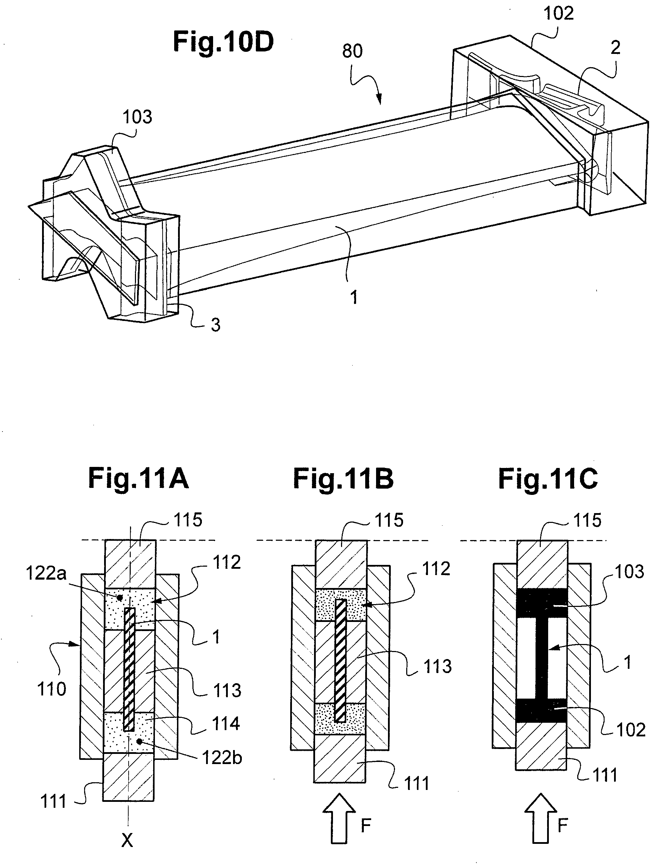

Cette technique est décrite de manière schématique en référence aux figures 11A à 11C.

Elle met en oeuvre un outillage comprenant une première partie fixe 110 fermée d'un côté par une deuxième partie 115 fixe et de l'autre côté par une troisième partie 111, ces trois parties définissant une cavité 112, dans laquelle la deuxième partie 111 est montée mobile en translation selon l'axe longitudinal X de la cavité 112.

A l'intérieur de la cavité 112 est prévue une troisième pièce 113 également mobile selon l'axe longitudinal X. Elle est réalisée en deux demi-coquilles pour permettre le démoulage. Cette pièce 113 est destinée à maintenir une âme 1 ou un bloc, tel que le bloc 42, dans lequel une âme peut être réalisée.

Cette pièce 113 délimite deux sous cavités 122a et 122b, dans lesquelles de la poudre 114 est introduite dans des quantités appropriées.

Cette poudre peut être une poudre d'alliage métallique comme du TiAl, ou une poudre de céramique, comme du carbure de silicium (SiC).

La figure 11B décrit l'étape suivante du procédé dans laquelle une pression, schématisée par la flèche F est appliquée sur la deuxième pièce 111, laquelle translate à l'intérieur de la cavité 112, comme la troisième pièce 113.

L'application de cette pression permet de tasser la poudre à l'intérieur des cavités 122a et 122b dont le volume a diminué entre l'étape illustrée à la figure 11A et la fin de l'étape illustrée à la figure 11B.

La figure 11B montre que l'interface de liaison entre l'âme 1 et le bloc 103 est très supérieure à la section de l'âme. Cette dernière correspondrait à l'interface de liaison dans le cas d'un assemblage bout à bout.

La figure 11C illustre une dernière étape du procédé dans laquelle une force de pression est toujours exercée sur la deuxième pièce 111, un courant électrique étant par ailleurs appliqué à travers la deuxième partie 115, ce courant traversant les différentes pièces présentes à l'intérieur de la cavité 112. Cette dernière étape du procédé permet de densifier la poudre présente dans les cavités 122a et 122b et d'obtenir, dans l'exemple illustré à la figure 10A, les blocs 102 et 103 qui sont donc créés simultanément sur l'âme 1 ou sur le bloc 42.

La figure 10C montre que le procédé selon l'invention permet d'obtenir un bloc de forme parallélépipédique tel que le bloc 102, ou encore un bloc présentant un profil spécifique, tel que le bloc 103, profil qui est proche de celui de la tête 3.

A cet égard, il convient de noter que dans l'exemple illustré à la figure 10C, le bloc 42 traverse complètement les blocs 102 et 103 obtenus à base de poudre, cette configuration étant donc différente de celle illustrée sur les figures 11A à 11C.

Dans tous les cas, le bloc 42 (ou l'âme de l'aube si le bloc est préalablement usiné) est au moins en partie inséré dans les blocs 102 et 103, si bien que la surface de liaison entre le bloc 42 et respectivement le bloc 102 ou le bloc 103 est plus importante que dans le cas d'un assemblage bout à bout.

Par ailleurs, la partie de l'aube qui subit le plus de contraintes, en l'espèce l'âme, peut être continue sur l'ensemble de l'aube, ce qui renforce sa résistance.

Ainsi, de préférence, la longueur de l'âme sera choisie pour traverser complètement le pied (et donc affleurer la surface extérieure du pied, sur l'aube finale), la zone de liaison âme/pied étant celle qui est la plus sollicitée dans une aube mobile.

Bien entendu, l'invention n'est pas limitée à ces deux exemples et les blocs pourraient présenter une autre géométrie simple comme une rondelle ou encore un profil encore plus proche de l'extrémité à obtenir.

Les figures 10A et 10B illustrent une aube obtenue à partir de l'ébauche illustrée à la figure 10C.

Ces deux figures ont pour objectif de montrer l'imbrication entre l'âme massive et la tête et le pied obtenus à partir de poudre.

Ainsi, ces deux figures montrent que la jonction entre l'âme et les extrémités est réalisée dans ces dernières, donc en dehors des zones de plus fortes contraintes de l'aube. Ceci contribue à renforcer la tenue mécanique de l'aube obtenue.

Par ailleurs, si la poudre est d'un coût de revient plus important qu'une matière brute, on comprend que le procédé qui vient d'être décrit permet de réaliser des pièces d'extrémité dont les cotes sont très proches de la tête ou du pied de l'aube finale. Ainsi, ce procédé permet de réduire les étapes d'usinage de l'ébauche, ainsi que la matière utilisée.

La figure 10D illustre une variante du procédé illustré à la figure 10C, dans lequel l'ébauche de l'aube est obtenue à partir d'une pièce massive, telle que le bloc 80 illustré à la figure 6A et dans lequel peut être obtenu d'une seule pièce, une âme 1 et un pied 2 (illustrés en traits fins sur la figure 10D) et d'un bloc 103 obtenu à partir de poudre et dans lequel peut être réalisée la tête 3 de l'âme finale (illustrée également en traits fins).

Ainsi, l'aube obtenue présentera, du côté de la tête 3, une imbrication entre l'âme massive et la tête 3 telle qu'illustrée sur la figure 10A.

Comme illustré sur les figures 10A et 10B, la figure 10D confirme que le bloc 103 est réalisé directement sur le bloc 80.

Les figures 10A à 10D montrent que l'apport de poudre permet de réaliser, à au moins une extrémité de l'âme, une pièce qui a une géométrie différente de celle de l'âme et notamment une section très différente. En d'autres termes, on constate une différence de section majeure entre l'âme et le pied (ou la tête) formé sur celle-ci grâce à l'apport de poudre.

Par ailleurs, l'apport de poudre est utilisé pour réaliser une zone fonctionnelle de la pièce qui est soumise à de fortes contraintes.

C'est notamment le cas pour le pied d'une aube de rotor, raccordé au disque intérieur du rotor.

Par ailleurs, dans le cas d'une aube de stator, le pied et la tête de l'aube sont les deux zones de l'aube soumises aux contraintes les plus importantes.

Enfin, la masse de matière apportée initialement (avant usinage) avec la poudre peut correspondre à la masse totale de l'aube finale. Par ailleurs, après usinage, la masse de matière apportée avec la poudre représente une part substantielle de la masse de l'aube finale (par exemple de l'ordre de 10%).

Une autre variante du procédé (non illustrée sur les figures) consiste à réaliser une ébauche de l'aube à partir de deux pièces massives et d'une pièce obtenue à partir de poudre.

A titre d'exemple, cette ébauche peut être obtenue à partir d'un bloc 42, 71 ou 61, tel qu'illustré sur les figures 2B, 2D ou 4B, d'une autre pièce massive destinée à la formation du pied 2 de l'aube telle que le bloc 51 illustré à la figure 3A, ainsi qu'une pièce obtenue à partir de poudre et destinée à la formation de la tête 3 de l'aube. Ce dernier cas correspond, en pratique, à une variante du procédé illustré aux figures 7A-7B et 8A-8B.

Tous les exemples décrits confirment que le procédé selon l'invention permet de minimiser la matière utilisée et les chutes de matière, la séparation de l'aube en deux ou trois parties donnant plus de souplesse dans l'utilisation de la matière.

Pour illustrer les gains en matière pouvant être réalisés avec le procédé selon l'invention, est indiquée dans le tableau ci-dessous la masse totale (g) de matière mise en oeuvre pour obtenir une aube (Masse/aube) dans différentes hypothèses.

La référence (de valeur 100) correspond à une aube obtenue grâce au procédé décrit dans le document FR 2 997 885.

| Procédé | | Masse/aube (g) | Gain vs FR 2 997 885 |
|---|---|---|---|
| FR 2 997 885 | | 100 | |
| Figures | 6A-6B | 88 | 12 % |
| | 9A-9B | | |
| Figures 4A-4B, | | 69 | 31 % |
| 5A-5B, 7A-7B, 8A-8B | | | |
| Figures 10A-10C | | 40 | 60 % |

Par ailleurs, une fois l'ébauche de l'aube obtenue, un usinage est réalisé pour retirer les surépaisseurs et obtenir l'aube dans ses dimensions finales, telle qu'illustrée sur les figures 1, 10A et 10B.

Il a été réalisé deux essais de traction à température ambiante sur différents types d'éprouvettes pour montrer les conséquences d'un assemblage réalisé par une technique de raccordement sans fusion sur une pièce.

Ces essais de traction à température ambiante ont été réalisés selon la norme NF EN ISO 6892-1.

Les valeurs typiques de limite de rupture (Rm), de limite élastique (Rp02) sont données dans les deux tableaux ci-dessous.

Les valeurs minimales requises sont classiquement données par le constructeur et correspondent à un dimensionnement de l'aube lui permettant de résister aux contraintes auxquelles elle est soumise.

Ainsi, dans un premier essai, plusieurs éprouvettes ont été réalisées :
- éprouvette 1 : obtenue par fonderie et massive
- éprouvette 2 : obtenue par l'assemblage de deux pièces massives, par la technique SPS
- éprouvette 3 : obtenue par l'assemblage d'une pièce massive et d'une pièce formée par poudre.

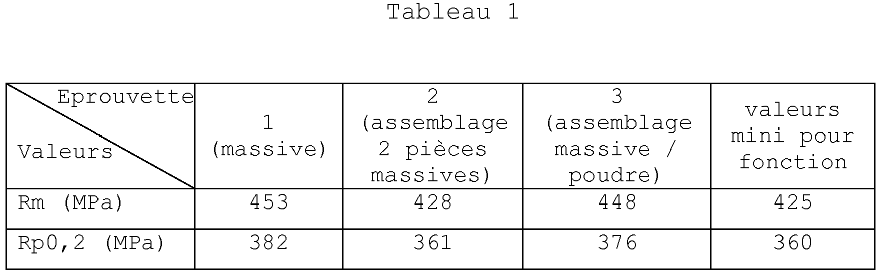

Le tableau 1 confirme que les techniques d'assemblage sans fusion permettent d'obtenir des pièces dont les caractéristiques mécaniques sont du même ordre ou supérieures à celles exigées pour la fonction.

Dans un deuxième essai, plusieurs éprouvettes ont été réalisées :
- éprouvette A : obtenue par fonderie et massive
- éprouvette B : obtenue par poudre consolidée par la technique SPS
- éprouvette C : obtenue par l'assemblage d'une pièce massive et de poudre consolidée par la technique SPS.

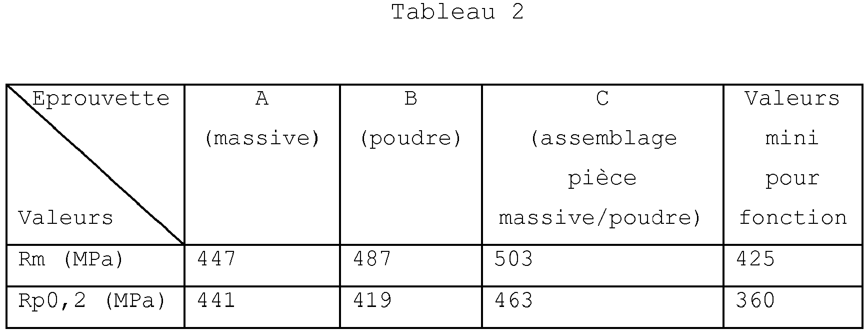

Le tableau 2 montre de façon étonnante que les techniques sans fusion du type SPS mises en oeuvre avec de la poudre permettent même d'obtenir des pièces dont les caractéristiques mécaniques sont supérieures à celles exigées pour la fonction et à celles correspondant à une pièce massive.

De manière générale, le concepteur des aubes choisira le procédé de fabrication le plus adapté en fonction des contraintes auxquelles elles sont soumises.

Comme il va de soi et comme il résulte également de ce qui précède, la présente invention n'est pas limitée aux modes de réalisation plus particulièrement décrits. Elle en embrasse au contraire toutes les variantes dans le cadre des revendications et notamment celles où une pièce massive, par exemple l'âme, est à base de céramique et non de métal, notamment un matériau composite à matrice céramique composé de fibres céramiques tissées et imprégnées de céramique, comme du carbure de silicium (SiC), les extrémités étant par exemple réalisées à partir de poudre céramique ou métallique.

## Revendications

1. Procédé d'obtention d'une aube pleine de turbomachine comprenant une âme (1), une tête (3) et un pied (2), ledit procédé comprenant :
- une étape de réalisation d'une ébauche à partir d'au moins deux pièces (42, 61, 71, 50, 51, 64, 65, 80, 81, 90, 91, 92, 93), au moins l'une d'elles étant une pièce massive obtenue par découpe d'un barreau en un alliage métallique ou en un matériau à base de céramique, lesdites au moins deux pièces étant assemblées par une technique de raccordement par diffusion et sans fusion et,
- une étape d'usinage de cette ébauche pour aboutir à une aube avec un profil défini.

2. Procédé selon la revendication 1, dans lequel au moins deux desdites pièces sont massives.

3. Procédé selon la revendication 1 ou 2, dans lequel au moins une desdites pièces (102, 103) est obtenue à l'aide de poudre, en étant formée directement sur ladite au moins une pièce massive.

4. Procédé selon l'une quelconque des revendications 1 à 3, dans lequel ladite au moins une pièce massive est un bloc en un alliage métallique.

5. Procédé selon la revendication 4, dans lequel l'âme (1) de ladite aube est obtenue à partir d'un bloc (61) découpé en périphérie d'un brut cylindrique (6) de section pleine, pour bénéficier de son rayon de courbure dans la réalisation de l'extrados de ladite âme.

6. Procédé selon la revendication 4, dans lequel l'âme (1) de ladite aube est obtenue à partir d'un bloc (42) découpé dans un brut cylindrique (4) de section annulaire, pour bénéficier de son rayon de courbure dans la réalisation de l'extrados et/ou de l'intrados de ladite âme.

7. Procédé selon l'une des revendications 1 à 3, dans lequel au moins une pièce massive est à base de céramique, notamment en un matériau composite à matrice céramique.

8. Procédé selon l'une quelconque des revendications 3 à 7, dans lequel la poudre est une poudre d'alliage métallique ou une poudre de céramique.

9. Procédé selon l'une quelconque des revendications 4 à 6 et 8, dans lequel l'alliage métallique est de l'aluminure de titane (gamma TiAl).

10. Procédé selon l'une quelconque des revendications 1 à 9, dans lequel l'assemblage desdites au moins deux pièces est effectué par un procédé de soudage par friction linéaire.

11. Procédé selon l'une quelconque des revendications 1 à 9, dans lequel l'assemblage desdites au moins deux pièces est effectué par un procédé de soudage diffusion sous pression.

12. Procédé selon l'une des revendications 1 à 11 dans lequel ladite au moins une pièce massive est usinée préalablement à son assemblage.

13. Aube pleine de turbomachine obtenue avec un procédé selon l'une quelconque des revendications 1 à 12, cette aube étant en aluminiure de titane et/ou en un matériau à base de céramique.

14. Turbomachine comprenant au moins une aube selon la revendication 13.

## Patentansprüche

1. Verfahren zur Herstellung einer Vollschaufel für eine Turbomaschine, die einen Steg (1), einen Kopf (3) und einen Fuß (2) umfasst, wobei das Verfahren umfasst:
- einen Schritt der Herstellung eines Rohlings aus mindestens zwei Teilen (42, 61, 71, 50, 51, 64, 65, 80, 81, 90, 91, 92, 93), wobei mindestens eines dieser Teile ein massives Teil ist, das durch Schneiden eines Stabes aus einer Metalllegierung oder aus einem Material auf Keramikbasis erhalten wird,
wobei die mindestens zwei Teile durch eine Verbindungstechnik durch Diffusion und ohne Schmelzen zusammengefügt werden, und,
- einen Schritt der Bearbeitung dieses Rohlings, um zu einer Schaufel mit einem definierten Profil zu gelangen.

2. Verfahren nach Anspruch 1,
wobei mindestens zwei der genannten Teile massiv sind.

3. Verfahren nach Anspruch 1 oder 2,
wobei mindestens eines der Teile (102, 103) mithilfe von Pulver erhalten wird, indem es direkt auf dem mindestens einen massiven Teil geformt wird.

4. Verfahren nach einem der Ansprüche 1 bis 3,
wobei das mindestens eine massive Teil ein Block aus einer Metalllegierung ist.

5. Verfahren nach Anspruch 4, bei dem der Steg (1) der Schaufel aus einem Block (61) gewonnen wird, der am Umfang eines zylindrischen Rohlings (6) mit vollem Querschnitt ausgeschnitten ist, um bei der Herstellung der Oberseite des Stegs von dessen Krümmungsradius zu profitieren.

6. Verfahren nach Anspruch 4, bei dem der Steg (1) der Schaufel aus einem Block (42) gewonnen wird, der aus einem zylindrischen Rohling (4) mit ringförmigem Querschnitt ausgeschnitten wird, um bei der Herstellung der Oberseite und/oder der Unterseite des Stegs von dessen Krümmungsradius zu profitieren.

7. Verfahren nach einem der Ansprüche 1 bis 3, bei dem mindestens ein massives Teil auf Keramikbasis, insbesondere aus einem Verbundwerkstoff mit Keramikmatrix, hergestellt ist.

8. Verfahren nach einem der Ansprüche 3 bis 7,
wobei das Pulver ein Metalllegierungspulver oder ein Keramikpulver ist.

9. Verfahren nach einem der Ansprüche 4 bis 6 und 8,
wobei die Metalllegierung Titanaluminid (gamma TiAl) ist.

10. Verfahren nach einem der Ansprüche 1 bis 9,
wobei das Verbinden der mindestens zwei Teile durch ein lineares Reibschweißverfahren erfolgt.

11. Verfahren nach einem der Ansprüche 1 bis 9,
wobei das Verbinden der mindestens zwei Teile durch ein Druckdiffusionsschweißverfahren erfolgt.

12. Verfahren nach einem der Ansprüche 1 bis 11, bei dem das mindestens eine massive Teil vor dem Zusammenbau bearbeitet wird.

13. Vollschaufel einer Turbomaschine, die mit einem Verfahren nach einem der Ansprüche 1 bis 12 hergestellt wurde,
wobei die Schaufel aus Titanaluminid und/oder einem Material auf Keramikbasis besteht.

14. Turbomaschine mit mindestens einer Schaufel nach Anspruch 13.

## Claims

1. Method for obtaining a turbomachine solid blade comprising a core (1), a head (3) and a root (2), said method comprising:
- a step of producing a blank from at least two parts (42, 61, 71, 50, 51, 64, 65, 80, 81, 90, 91, 92, 93), at least one of them being a solid part obtained by cutting of a bar made of a metal alloy or of a ceramic-based material, said at least two parts being assembled by a diffusion connection technique without melting, and
- a step of machining this blank to produce a blade with a defined profile.

2. Method according to Claim 1, wherein at least two of said parts are solid.

3. Method according to Claim 1 or 2, wherein at least one of said parts (102, 103) is obtained using powder, being formed directly on said at least one solid part.

4. Method according to any one of Claims 1 to 3, wherein said at least one solid part is a block made of a metal alloy.

5. Method according to Claim 4, wherein the core (1) of said blade is obtained from a block (61) cut at the periphery of a cylindrical rough piece (6) with a solid section, to take advantage of the radius of curvature thereof in producing the outer surface of said core.

6. Method according to Claim 4, wherein the core (1) of said blade is obtained from a block (42) cut in a cylindrical rough piece (4) with an annular section, to take advantage of the radius of curvature thereof in producing the outer surface and/or the inner surface of said core.

7. Method according to one of Claims 1 to 3, wherein at least one solid part is ceramic-based, in particular made of a ceramic matrix composite.

8. Method according to any one of Claims 3 to 7, wherein the powder is a metal alloy powder or a ceramic powder.

9. Method according to any one of Claims 4 to 6 and 8, wherein the metal alloy is titanium aluminide (gamma TiAl).

10. Method according to any one of Claims 1 to 9, wherein said at least two parts are assembled using a linear friction welding method.

11. Method according to any one of Claims 1 to 9, wherein said at least two parts are assembled using a method of diffusion welding under pressure.

12. Method according to one of Claims 1 to 11, wherein said at least one solid part is machined prior to the assembly thereof.

13. Turbomachine solid blade obtained using a method according to any one of Claims 1 to 12, this blade being made of titanium aluminide and/or of a ceramic-based material.

14. Turbomachine comprising at least one blade according to Claim 13.
